# EUROPÄISCHE PATENTSCHRIFT

(11) **EP 3 181 379 B1**
(45) Veröffentlichungstag und Bekanntmachung des Hinweises auf die Patenterteilung: **19.02.2020**
(21) Anmeldenummer: 16188236.0
(22) Anmeldetag: 12.09.2016
(51) Int. Cl.: B60C 19/08

(54) **FAHRZEUGLUFTREIFEN**
PNEUMATIC TYRES FOR A VEHICLE
PNEUMATIQUES DE VÉHICULE

(30) Priorität: 14.12.2015 DE 102015225154
(43) Veröffentlichungstag der Anmeldung: 21.06.2017
(73) Patentinhaber: Continental Reifen Deutschland GmbH, 30165 Hannover (DE)
(72) Erfinder: Weber, Christian, 30826 Garbsen (DE); Kendziorra, Norbert, 30827 Garbsen (DE)
(74) Vertreter: Finger, Karsten

(56) Entgegenhaltungen:
- EP-A1- 2 027 991
- EP-A2- 2 799 247
- JP-A- 2009 154 608
- US-A1- 2014 053 961

## Beschreibung

Die Erfindung betrifft einen Fahrzeugluftreifen mit einem Laufstreifen, einem zumindest zweilagigen Gürtelverband, gegebenenfalls einer vorzugsweise als Spulbandage ausgeführten Gürtelbandage, ferner mit zumindest einem im Laufstreifen angeordneten, diesen durchsetzenden und sich bis zur Laufstreifenaußenfläche erstreckenden elektrisch leitfähigen Element, wobei zumindest eine mit der Felge in Verbindung stehende elektrisch leitfähige Seitenwandpassage vorgesehen ist, wobei mit dem Gürtelverband in Kontakt stehendes elektrisch leitfähiges Material das elektrisch leitfähige Element mit der elektrisch leitfähigen Seitenwandpassage verbindet und wobei die Gürtellagen und die Gürtelbandage elektrisch nicht leitfähige Gummierungen aufweisen, und wobei das elektrisch leitfähige Material zumindest eine in axialer Richtung verlaufende und in Umfangsrichtung begrenzte lokale elektrisch leitfähige Passage zwischen dem elektrisch leitfähigen Element und der elektrisch leitfähigen Seitenwandpassage bildet.

Ein Fahrzeugluftreifen der eingangs genannten Art ist beispielsweise aus der EP 2 799 247 A2 bekannt. Das mit dem Gürtelverband in Kontakt stehende elektrisch leitfähige Material ist streifenartig ausgebildet und erstreckt sich ferner im Bereich zwischen der einen Seitenwand und der Karkasseinlage bis zum Hornprofil. Die Breite des streifenartigen Materials in Umfangsrichtung beträgt mindestens 5,0 mm.

Die US 2014/053961 A1 offenbart einen Fahrzeugluftreifen mit einem Laufstreifen, in welchem eine in Umfangsrichtung umlaufende elektrisch leitfähige Gummischicht integriert ist. Die Gummischicht verläuft Großteils radial außerhalb des Gürtelverbandes und durchsetzt den Laufstreifen in seinem mittleren Bereich mit einem Endabschnitt in radialer Richtung. In der Reifenschulter kontaktiert die Gummischicht die Karkasseinlage, welche ebenfalls elektrisch leitfähig ausgeführt ist.

Die EP 2 027 991 A1 offenbart ein Verfahren zur Herstellung eines Fahrzeugluftreifens, bei welchem ein den Laufstreifen in radialer Richtung durchsetzendes, sich bis zur Laufstreifenaußenfläche erstreckendes elektrisch leitfähiges Element eingebaut wird. Beim Verfahren wird zunächst ein Teil des Laufstreifens bzw. ein Teil der Laufstreifencap als Profil extrudiert. An der Stirnfläche des Profils wird ein elektrisch leitfähiges Material aufgebracht und im nächsten Schritt wird dieses Profil mit einem zweiten extrudierten Profil zum kompletten Laufstreifen bzw. zur kompletten Laufstreifencap zusammengefügt.

Ferner ist aus der DE 10 2013 109 972 A1 ein Reifen bekannt, welcher eine Gürtelbandage mit Bandagenlagenteilen aufweist, von welchen ein Teil elektrisch leitfähig ist und zwischen einem elektrisch leitfähigen bis zur Außenfläche des Laufstreifens reichenden Laufstreifenteil, insbesondere einem Carbon-Center-Beam, und einer mit der Felge in Kontakt stehenden elektrisch leitfähigen Seitenwandpassage verläuft.

Aus der JP 2009 154608 A ist ein Fahrzeugluftreifen, welcher in seinem Seitenwandbereich zumindest zwei zwischen der Karkasseinlage und der Seitenwand angeordnete elektrisch leitfähige Gummistreifen aufweist, bekannt. Die elektrisch leitfähigen Gummistreifen verlaufen derart, dass sie jeweils das elektrisch leitfähige Hornprofil sowie einen elektrisch leitfähigen Gürtelkantenpolster kontaktieren, welcher mit einer in elektrisch leitfähiger Verbindung mit der Laufstreifenaußenfläche stehenden Laufstreifenbase in Kontakt steht.

Um den Rollwiderstand von Fahrzeugluftreifen zu reduzieren ist es günstig, möglichst viele der Gummi aufweisenden Reifenbauteile aus mit Silica gefüllten Kautschukmischungen zu fertigen.

Der Erfindung liegt daher die Aufgabe zugrunde, bei einem Fahrzeugluftreifen der eingangs genannten Art den Rollwiderstand durch zusätzliche Anwendung von Silica gefüllten Kautschukmischungen noch weiter senken zu können und dabei weiterhin die Ableitung elektrostatischer Aufladungen zu gewährleisten.

Die gestellte Aufgabe wird erfindungsgemäß dadurch gelöst, dass das elektrisch leitfähige Material durch zwei benachbarte Windungen der Gürtelbandage hindurchgeführt ist und ansonsten auf der radial äußersten Gürtellage verläuft.

Die Ableitung elektrostatischer Aufladungen wird bei erfindungsgemäß ausgeführten Reifen daher mittels lokaler elektrisch leitfähiger Passagen sichergestellt, welche es gestatten, sowohl das Gummimaterial der Gürtellagen als auch jenes einer etwaig vorgesehenen Gürtelbandage aus einer einen hohen Silicanteil aufweisenden Kautschukmischung zu fertigen. Erfindungsgemäß ausgeführte Fahrzeugluftreifen weisen daher einen eine besonders hohe Haltbarkeit aufweisenden Gürtelverband auf, welcher sich insbesondere durch eine hohe Schnitt- und Rissbeständigkeit auszeichnet. Vorteilhafter Weise kann das Aufbringens des die elektrisch leitfähigen Passagen bildenden Materials auf besonders rationelle Weise in den Prozess der Reifenherstellung integriert werden.

Die erfindungsgemäßen lokal vorgesehenen, in Umfangsrichtung begrenzten elektrisch leitfähigen Passagen können vorteilhafterweise von unterschiedlichen elektrisch leitfähigen Materialien gebildet werden.

Bei einer bevorzugten Ausführungsvariante ist das elektrisch leitfähige Material zumindest ein elektrisch leitfähiger Gummistreifen, welcher sich vorteilhafterweise auf besonders haltbare Weise mit den angrenzendem ebenfalls aus einer Kautschukmischung gefertigten Reifenbauteilen verbinden lässt.

Besonders bevorzugter Weise sind als elektrisch leitfähiges Material zwei einander abschnittsweise, insbesondere radial innerhalb der Gürtelbandage überlappende Gummistreifen vorgesehen, von welchen zumindest einer durch benachbarte Windungen der Gürtelbandage durchgeführt ist. Mittels zweier Gummistreifen können auf besonders einfache Weise elektrisch leitfähige Passagen im Reifen gebildet werden.

Der bzw. die Gummistreifen weist bzw. weisen vorzugsweise eine Dicke von 0,5 mm bis 1,0 mm auf. Lokal eingebaute Gummistreifen derartiger Dicken haben keinen Einfluss auf die Uniformity des Reifens.

Um eine besonders zuverlässige Ableitung elektrostatischer Aufladungen zu ermöglichen, weist jeder Gummistreifen in Umfangsrichtung eine Breite von 2,0 mm bis 80,0 mm, insbesondere von 5,0 mm bis 50,0 mm, auf.

Bei einer bevorzugten Ausführungsvariante ist das elektrisch leitfähige Material zumindest ein elektrisch leitfähiger Faden oder ein elektrisch leitfähiges Gewebe. Fäden und Gewebe können ebenfalls besonders einfach bei der Reifenfertigung im Reifen eingebaut werden.

Bei weiteren bevorzugten Ausführungsvarianten ist das elektrisch leitfähige Material eine aufgesprühte oder aufgestrichene elektrisch leitfähigen Paste, eine elektrisch leitfähige Sprühlösung oder eine elektrisch leitfähige Suspension.

Bei noch weiteren bevorzugten Ausführungsvarianten ist das elektrisch leitfähige Material ein elektrisch leitfähiges Pulver oder ein elektrisch leitfähiges Granulat.

Um eine besonders zuverlässige leitfähigen Verbindung vom lokalen elektrisch leitfähige Material zur elektrisch leitfähigen Seitenwandpassage zu gewährleisten, ist bei einer weiteren bevorzugten Ausführungsvariante im Schulterbereich eine auf der Karkasseinlage sich in Umfangsrichtung erstreckende, insbesondere in Umfangsrichtung umlaufende, vorzugsweise von einem Gummistreifen gebildete, elektrisch leitfähige Passage vorgesehen, welche das elektrisch leitfähige Material und die elektrisch leitfähige Seitenwandpassage kontaktiert.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Querschnitt durch eine Hälfte eines Fahrzeugluftreifens im Bereich des Gürtelverbandes und des Laufstreifens mit einer Ausführungsform der Erfindung und
Fig. 2 eine Schrägansicht auf einen Umfangsabschnitt des Gürtelverbandes des Fahrzeugluftreifens aus Fig. 1.

Erfindungsgemäß ausgeführte Fahrzeugluftreifen können Reifen für PKW, Vans, Light-Trucks oder Nutzfahrzeuge sein.

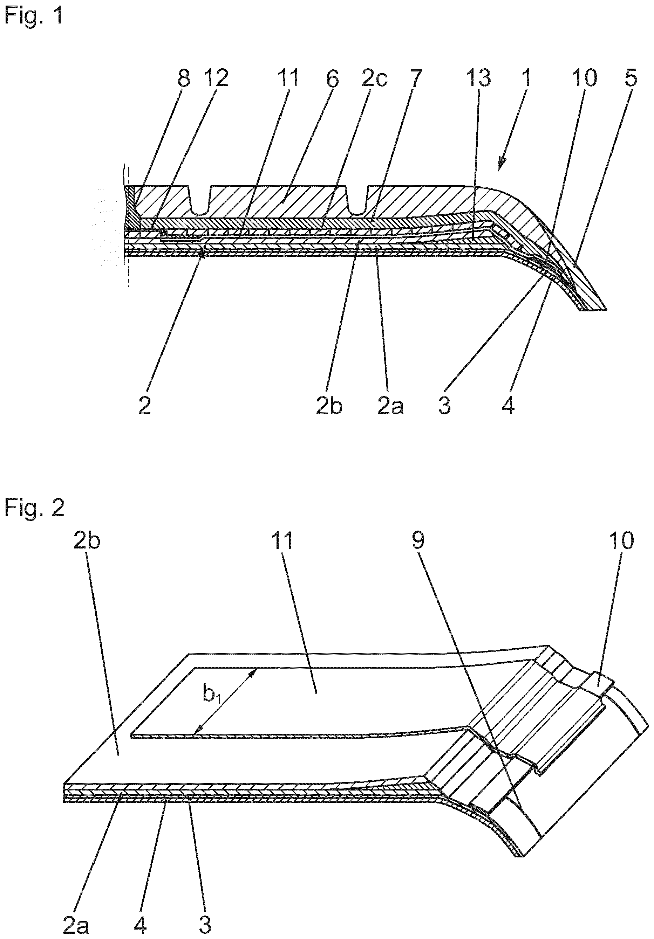

In Fig. 1 sind von den wesentlichen Bauteilen eines für einen PKW vorgesehenen Fahrzeugluftreifens in Radialbauart ein Laufstreifen 1, ein zweilagiger Gürtelverband 2, eine Karkasseinlage 3, eine luftdichte Innenschicht 4 und der radial äußere Bereich einer Seitenwand 5 dargestellt.

Die Karkasseinlage 3, die Innenschicht 4 und die Seitenwände 5 sowie die nicht gezeigten Wulstbereiche können in an sich bekannter Weise ausgeführt sein, wobei die Gummierung der Karkasseinlage 3 vorzugsweise elektrisch nicht leitfähig ist.

Der Laufstreifen 1 ist bei der gezeigten Ausführungsvariante in radialer Richtung zweischichtig aufgebaut und setzt sich aus einer die Profilierung enthaltenden Laufstreifencap 6 und einer radial innerhalb der Laufstreifencap 6 verlaufenden Laufstreifenbase 7 zusammen, welche elektrisch nicht leitfähig sind, insbesondere jeweils aus einer einen derartigen Anteil an Silica (fein verteilter Kieselsäure) enthaltenden Kautschukmischung gefertigt sind, dass sie aus einem elektrisch nicht leitfähigen Gummimaterial bestehen. Unter einem elektrisch nicht leitfähigen Gummimaterial wird ein solches verstanden, das einen spezifischen elektrischen Widerstand > 1 x 10⁸ Ohm*cm aufweist. Alternativ kann der Laufstreifen 1 auch als ein elektrisch nicht leitfähiger Monolaufstreifen ausgeführt sein.

Im Laufstreifen 1 sind den Laufstreifen 1 in radialer Richtung durchsetzende sich bis zur Laufstreifenaußenfläche erstreckende elektrisch leitfähige Elemente vorgesehen, welche derart über den Reifenumfang verteilt sind, dass sich beim Abrollen des Reifens zumindest eines der Elemente in der Reifenaufstandsfläche befindet. Beim gezeigten Ausführungsbeispiel ist lediglich ein einziges Element, ein aus elektrisch leitfähigem Gummimaterial bestehender in Umfangsrichtung umlaufender Carbon-Center-Beam 8 im Laufstreifen 1 eingebaut.

Zwischen dem bzw. jedem elektrisch leitfähigen Element im Laufstreifen 1 und der Felge sind elektrisch leitfähige Verbindungen vorgesehen, zu welchen eine lokale elektrisch leitfähige Passage zwischen dem jeweiligen Element und einer vorzugsweise in an sich bekannter Weise ausgeführten elektrisch leitfähigen Seitenwandpassage gehören. Über den Umfang des Reifens sind im Reifen vorzugsweise drei bis zehn derartige lokale elektrisch leitfähige Passagen vorhanden.

Bei der in den Figuren gezeigten Ausführungsvariante sind die lokalen elektrisch leitfähigen Passagen jeweils von zwei in axialer Richtung verlaufenden elektrisch leitfähigen Gummistreifen 11, 12 gebildet. Im Schulterbereich ist vorzugsweise ein weiterer auf der Karkasseinlage 3 positionierter, mit dem Gummistreifen 11 überlappender elektrisch leitfähiger Gummistreifen 10 vorgesehen, welcher den Reifen in Umfangsrichtung umläuft und einen konstruktiv einfachen elektrisch leitfähigen Übergang zur elektrisch leitfähigen Seitenwandpassage schafft, welche beim gezeigten Ausführungsbeispiel aus elektrisch leitfähigen Fäden 9 (Fig. 2) besteht.

Der Gürtelverband 2 weist zwei Gürtellagen 2a, 2b auf und ist mit einer Gürtelbandage 2c bedeckt, welche eine aus einem oder mehreren Materialstreifen gefertigte Spulbandage ist. Die beiden Gürtellagen 2a, 2b bestehen aus in ein elektrisch nicht leitfähiges Gummimaterial eingebetteten Stahlkorden, welche in an sich bekannter Weise zur Umfangsrichtung gewinkelt und zueinander gekreuzt verlaufen. Die Gürtelbandage 2c ist eine sogenannte Spulbandage aus einem Streifen aus elektrisch nicht leitfähigem Gummimaterial mit eingebetteten, in Umfangsrichtung verlaufenden textilen Festigkeitsträgern, vorzugsweise Nylonkorden. Beim gezeigten Ausführungsbeispiel ist in jedem Schulterbereich ein in an sich bekannter Weise ausgeführter Gürtelkantenpolster 13 vorgesehen.

Der Gummistreifen 11 ist zwischen der radial äußeren Gürtellage 2b und der Gürtelbandage 2c positioniert und steht mit seinem laufstreifenaußenseitigen Endabschnitt, beim gezeigten Ausführungsbeispiel über den Gummistreifen 10, mit den elektrisch leitfähigen Seitenwandpassagen bzw. den elektrisch leitfähigen Fäden 9 (Fig. 2) in leitender Verbindung. Der laufstreifeninnenseitige Endabschnitt des Gummistreifens 11 ist im Bereich radial innerhalb des Carbon-Center-Beams 8 positioniert. Der Gummistreifen 12 kontaktiert den Carbon-Center-Beams 8 und ist durch zwei benachbarte Windungen der als Spulbandage ausgeführten Gürtelbandage 2c durchgeführt, wobei er den Gummistreifen 11 kontaktiert, insbesondere abschnittsweise überlappt. Die Dicke der Gummistreifen 11, 12 beträgt beispielsweise jeweils 0,5 mm bis 1,0 mm, ihre in Umfangsrichtung ermittelte Breite b₁ (Fig. 2) beträgt beispielsweise jeweils 2,0 mm bis 80,0 mm, insbesondere jeweils 5,0 mm bis 50,0 mm.

Bei einer weiteren Ausführungsvariante ist anstelle der beiden Gummistreifen 11, 12 ein einziger Gummistreifen vorgesehen, welcher auf der Gürtelbandage 2c verläuft und den Carbon-Center-Beam 8 mit der elektrisch leitfähigen Seitenwandpassage elektrisch leitend verbindet.

Die erfindungsgemäß im Bereich des Gürtelverbandes 2 angeordneten lokalen elektrisch leitfähigen Passagen können auch von elektrisch leitfähigen Fäden oder einem aus diesen gefertigten Gewebe, ferner von aufgesprühten oder aufgestrichenen elektrisch leitfähigen Pasten, Sprühlösungen oder Suspensionen sowie von elektrisch leitfähigem Pulver oder Granulat gebildet werden.

Die erwähnten elektrisch leitfähigen Fäden können aus einem Trägerfaden aus einem elektrisch nicht leitfähigen Material, welcher eine äußere Beschichtung bzw. Ummantelung aus einem elektrisch leitenden Material aufweist, bestehen. Die Trägerfäden können beispielsweise aus Rayon, Polyester, Polyamid oder Aramid bestehen und ein Monofilament, ein Garn oder ein aus mehreren Garnen bestehender Kord sein. Die elektrisch leitfähige Beschichtung der Fäden kann aus Ruß, Graphitpulver oder Kohlenstoffnanoröhren oder aus einem elastomerhaltigen Material bestehen, welches beispielsweise auf einer Latex oder ein anderes Elastomer enthaltenden Suspension basiert, in welche elektrisch leitfähige Partikel, etwa Rußpartikel, Graphitpulver oder Kohlenstoffnanoröhren, enthalten sind, die die elektrische Leitfähigkeit der Beschichtung gewährleisten. Zur Herstellung der Beschichtung kann beispielsweise ein Rußpartikel enthaltender herkömmlicher Haftvermittler verwendet werden, der so weit flüssig ist, dass der Trägerfaden durch einen Dip-Vorgang beschichtet werden kann. Verwendet werden kann beispielsweise ein RFL-Dip (Resorzin-Formaldehyd-Latex-Dip), in welchem Rußpartikel, insbesondere N339-Partikel oder N121-Partikel, eingemischt sind. Der Anteil an elektrisch leitfähigen Partikeln in der Suspension beträgt 10 Gew.-% bis 70 Gew.-% und besonders bevorzugt von 30 Gew.-% bis 50 Gew.-%. Die elektrisch leitende Beschichtung der Trägerfäden kann auch ausschließlich aus elektrisch leitenden Partikeln, beispielsweise Rußpartikel, Garphitpulver oder Kohlenstoffnanoröhren, bestehen.

Die elektrisch leitfähigen Pasten, Sprühlösungen oder Suspensionen bestehen insbesondere aus einem flüssigen Medium und darin fein verteiltem elektrisch leitfähigen Material. Das flüssige Medium kann vor allem eine üblicherweise in Kautschukmischungen verwendet Flüssigkeit sein, wie beispielsweise Rapsöl, MES-Öl, TDAE-Öl, RAE-Öl, paraffinisches Öl oder dergleichen. Es können ferner weitere flüssige oder niedrigschmelzende mit Kautschuk chemisch verträgliche Dispersionsmedien verwendet werden, beispielsweise hochsiedende n-Alkane und iso-Alkane oder Alkene. Auch Weichmacherester mit entsprechenden Schmelz- und Siedepunkten können verwendet werden. Es kann daher das flüssige Dispersionsmedium vom Gummimaterial nach Applikation der Dispersion absorbiert werden, die an der Oberfläche jeweils verbleibende elektrisch leitfähige Materialschicht bildet die oben erwähnten lokalen elektrisch leitfähigen Passagen. Als fein verteiltes elektrisch leitfähiges Material können beispielsweise eine Kautschukmischung oder Partikel, insbesondere Ruß, beispielsweise Ruß N 339 oder N 121, Graphitpartikel, Kohlenstoffnanoröhren, Carbonfasern oder sonstige elektrisch leitfähige Partikel, beispielsweise auch entsprechende Nanopartikel, eingesetzt werden. Der Anteil an elektrisch leitfähigen Partikeln in der Suspension beträgt beispielsweise 10 Gew.-% bis 70 Gew.-%, insbesondere 30 Gew.-% bis 50 Gew.-%.

Es ist von Vorteil, die Dispersion vor dem Aufbringen etwas zu erwärmen, um die Migrationszeit der flüssigen Komponente zu verringern und die Viskosität der Dispersion zur Erleichterung der Applikation herabzusetzen. Der Dispersion kann ferner ein Elastomer zugefügt werden, um beim Vulkanisieren ein optimales Einbinden der elektrisch leitfähigen Partikel in die Gummimatrix zu unterstützen.

### Bezugsziffernliste

- 1 ......................: Laufstreifen
- 2 ......................: Gürtelverband
- 2a, 2b...............: Gürtellage
- 2c ....................: Gürtelbandage
- 3 ......................: Karkasseinlage
- 4 ......................: Innensicht
- 5 ......................: Seitenwand
- 6 ......................: Laufstreifencap
- 7 ......................: Laufstreifenbase
- 8 ......................: Carbon-Center-Beam
- 9 ......................: Faden
- 10 ...................: elektrisch leitfähiger Gummistreifen

- 11, 12.........: Gummistreifen
- 13 ....................: Gürtelkantenpolster

## Patentansprüche

1. Fahrzeugluftreifen mit einem Laufstreifen (1), einem zumindest zweilagigen Gürtelverband (2), gegebenenfalls einer vorzugsweise als Spulbandage ausgeführten Gürtelbandage (2c), ferner mit zumindest einem im Laufstreifen (1) angeordneten, diesen durchsetzenden und sich bis zur Laufstreifenaußenfläche erstreckenden elektrisch leitfähigen Element (8), wobei zumindest eine mit der Felge in Verbindung stehende elektrisch leitfähige Seitenwandpassage vorgesehen ist, wobei mit dem Gürtelverband (2) in Kontakt stehendes elektrisch leitfähiges Material (11, 12) das elektrisch leitfähige Element (8) mit der elektrisch leitfähigen Seitenwandpassage verbindet,
wobei die Gürtellagen (2a, 2b) und die Gürtelbandage (2c) elektrisch nicht leitfähige Gummierungen aufweisen und wobei das elektrisch leitfähige Material (11, 12) zumindest eine in axialer Richtung verlaufende und in Umfangsrichtung begrenzte lokale elektrisch leitfähige Passage zwischen dem elektrisch leitfähigen Element (8) und der elektrisch leitfähigen Seitenwandpassage bildet,
**dadurch gekennzeichnet,**
**dass** das elektrisch leitfähige Material (11, 12) durch zwei benachbarte Windungen der Gürtelbandage (2c) hindurchgeführt ist und ansonsten auf der radial äußersten Gürtellage (2b) verläuft.

2. Fahrzeugluftreifen nach Anspruch 1, **dadurch gekennzeichnet, dass** das elektrisch leitfähige Material (11, 12) zumindest ein elektrisch leitfähiger Gummistreifen ist.

3. Fahrzeugluftreifen nach Anspruch 1 oder 2, **dadurch gekennzeichnet, dass** als elektrisch leitfähiges Material (11, 12) zwei einander abschnittsweise, insbesondere radial innerhalb der Gürtelbandage (2c), überlappende Gummistreifen vorgesehen sind, von welchen zumindest einer durch benachbarte Windungen der Gürtelbandage (2c) durchgeführt ist.

4. Fahrzeugluftreifen nach Anspruch 2 oder 3, **dadurch gekennzeichnet, dass** jeder Gummistreifen eine Dicke von 0,5 mm bis 1,0 mm aufweist.

5. Fahrzeugluftreifen nach einem der Ansprüche 2 bis 4, **dadurch gekennzeichnet, dass** jeder Gummistreifen in Umfangsrichtung eine Breite (b₁) von 2,0 mm bis 80,0 mm, insbesondere von 5,0 mm bis 50,0 mm, aufweist.

6. Fahrzeugluftreifen nach Anspruch 1, **dadurch gekennzeichnet, dass** das elektrisch leitfähige Material (11, 12) zumindest ein elektrisch leitfähiger Faden oder ein elektrisch leitfähiges Gewebe ist.

7. Fahrzeugluftreifen nach Anspruch 1, **dadurch gekennzeichnet, dass** das elektrisch leitfähige Material (11, 12) eine aufgesprühte oder aufgestrichene elektrisch leitfähige Paste ist.

8. Fahrzeugluftreifen nach Anspruch 1, **dadurch gekennzeichnet, dass** das elektrisch leitfähige Material (11, 12) eine aufgesprühte elektrisch leitfähige Sprühlösung ist.

9. Fahrzeugluftreifen nach Anspruch 1, **dadurch gekennzeichnet, dass** das elektrisch leitfähige Material (11, 12) eine aufgesprühte oder aufgestrichene elektrisch leitfähige Suspension ist.

10. Fahrzeugluftreifen nach Anspruch 1, **dadurch gekennzeichnet, dass** das elektrisch leitfähige Material (11, 12) ein elektrisch leitfähiges Pulver ist.

11. Fahrzeugluftreifen nach Anspruch 1, **dadurch gekennzeichnet, dass** das elektrisch leitfähige Material (11, 12) ein elektrisch leitfähiges Granulat ist.

12. Fahrzeugluftreifen nach einem der Ansprüche 1 bis 11, **dadurch gekennzeichnet, dass** im Schulterbereich ein in Umfangsrichtung umlaufendes, vorzugsweise von einem Gummistreifen (10) gebildetes, elektrisch leitfähiges Element vorgesehen ist, welches sowohl das elektrisch leitfähige Material (11, 12) als auch die elektrisch leitfähige Seitenwandpassage kontaktiert.

## Claims

1. Vehicle pneumatic tyre having a tread (1), an at least two-ply belt assembly (2), if appropriate a belt bandage (2c) preferably implemented as a wound bandage, further having at least one electrically conductive element (8) that is arranged in the tread (1), passes through the latter and extends as far as the tread outer surface, wherein at least one electrically conductive side wall passage that is connected to the rim is provided, wherein electrically conductive material (11, 12) that is in contact with the belt assembly (2) connects the electrically conductive element (8) to the electrically conductive side wall passage,
wherein the belt plies (2a, 2b) and the belt bandage (2c) have electrically nonconductive rubber coatings, and wherein the electrically conductive material (11, 12) forms at least one local electrically conductive passage running in the axial direction and limited in the circumferential direction between the electrically conductive element (8) and the electrically conductive side wall passage,
**characterized in that**
the electrically conductive material (11, 12) is led through two adjacent windings of the belt bandage (2c) and otherwise runs on the radially outermost belt ply (2b).

2. Vehicle pneumatic tyre according to Claim 1, **characterized in that** the electrically conductive material (11, 12) is at least one electrically conductive rubber strip.

3. Vehicle pneumatic tyre according to Claim 1 or 2, **characterized in that** the electrically conductive material (11, 12) provided is two rubber strips partly overlapping each other, in particular radially within the belt bandage (2c), of which at least one is led through adjacent windings of the belt bandage (2c).

4. Vehicle pneumatic tyre according to Claim 2 or 3, **characterized in that** each rubber strip has a thickness of 0.5 mm to 1.0 mm.

5. Vehicle pneumatic tyre according to one of Claims 2 to 4, **characterized in that** each rubber strip has a width (b₁) in the circumferential direction of 2.0 mm to 80.0 mm, in particular of 5.0 mm to 50.0 mm.

6. Vehicle pneumatic tyre according to Claim 1, **characterized in that** the electrically conductive material (11, 12) is at least one electrically conductive thread or an electrically conductive fabric.

7. Vehicle pneumatic tyre according to Claim 1, **characterized in that** the electrically conductive material (11, 12) is an electrically conductive paste sprayed on or spread on.

8. Vehicle pneumatic tyre according to Claim 1, **characterized in that** the electrically conductive material (11, 12) is an electrically conductive spray solution sprayed on.

9. Vehicle pneumatic tyre according to Claim 1, **characterized in that** the electrically conductive material (11, 12) is an electrically conductive suspension sprayed on or spread on.

10. Vehicle pneumatic tyre according to Claim 1, **characterized in that** the electrically conductive material (11, 12) is an electrically conductive powder.

11. Vehicle pneumatic tyre according to Claim 1, **characterized in that** the electrically conductive material (11, 12) is electrically conductive granules.

12. Vehicle pneumatic tyre according to one of Claims 1 to 11, **characterized in that** an electrically conductive element running around in the circumferential direction, preferably formed by a rubber strip (10), is provided in the shoulder area and makes contact both with the electrically conductive material (11, 12) and with the electrically conductive side wall passage.

## Revendications

1. Pneumatique de véhicule comprenant une bande de roulement (1), un assemblage de nappes d'armature (2) comportant au moins deux couches, éventuellement un bandage de nappes d'armature (2c) de préférence conçu comme un bandage bobiné et comportant en outre au moins un élément électriquement conducteur (8) disposé dans la bande de roulement (1), traversant celle-ci et s'étendant jusqu'à la surface extérieure de la bande de roulement, au moins un passage de paroi latérale électriquement conducteur relié à la jante étant prévu, un matériau électriquement conducteur (11, 12) en contact avec le bandage de nappes d'armature (2) reliant l'élément électriquement conducteur (8) au passage de paroi latérale électriquement conducteur,
les couches de nappes d'armature (2a, 2b) et le bandage de nappes d'armature (2c) comportant des revêtements en caoutchouc électriquement non conducteurs, et le matériau électriquement conducteur (11, 12) formant entre l'élément électriquement conducteur (8) et le passage de paroi latérale électriquement conducteur au moins un passage local électriquement conducteur qui s'étend dans la direction axiale et qui est délimité dans la direction circonférentielle,
**caractérisé en ce que**
le matériau électriquement conducteur (11, 12) est guidé à travers deux enroulements adjacents du bandage de nappes d'armature (2c) et s'étend autrement sur la couche de nappe d'armature (2b) radialement la plus à l'extérieur.

2. Pneumatique de véhicule selon la revendication 1, **caractérisé en ce que** le matériau électriquement conducteur (11, 12) est au moins une bande de caoutchouc électriquement conductrice.

3. Pneumatique de véhicule selon la revendication 1 ou 2, **caractérisé en ce que** deux bandes de caoutchouc, qui se chevauchent au moins par endroits en particulier radialement à l'intérieur du bandage de nappes d'armature (2c), sont prévues comme matériau électriquement conducteur (11, 12), l'une au moins des deux bandes de caoutchouc étant guidée par des enroulements adjacents du bandage de nappes d'armature (2c) .

4. Pneumatique de véhicule selon la revendication 2 ou 3, **caractérisé en ce que** chaque bande de caoutchouc a une épaisseur de 0,5 mm à 1,0 mm.

5. Pneumatique de véhicule selon l'une des revendications 2 à 4, **caractérisé en ce que** chaque bande de caoutchouc a, dans la direction circonférentielle, une largeur (b₁) de 2,0 mm à 80,0 mm, notamment de 5,0 mm à 50,0 mm.

6. Pneumatique de véhicule selon la revendication 1, **caractérisé en ce que** le matériau électriquement conducteur (11, 12) est au moins un fil électriquement conducteur ou un tissu électriquement conducteur.

7. Pneumatique de véhicule selon la revendication 1, **caractérisé en ce que** le matériau électriquement conducteur (11, 12) est une pâte électriquement conductrice pulvérisée ou appliquée.

8. Pneumatique de véhicule selon la revendication 1, **caractérisé en ce que** le matériau électriquement conducteur (11, 12) est une solution de pulvérisation électriquement conductrice pulvérisée.

9. Pneumatique de véhicule selon la revendication 1, **caractérisé en ce que** le matériau électriquement conducteur (11, 12) est une suspension électriquement conductrice projetée ou appliquée.

10. Pneumatique de véhicule selon la revendication 1, **caractérisé en ce que** le matériau électriquement conducteur (11, 12) est une poudre électriquement conductrice.

11. Pneumatique de véhicule selon la revendication 1, **caractérisé en ce que** le matériau électriquement conducteur (11, 12) est un granulat électriquement conducteur.

12. Pneumatique de véhicule selon l'une des revendications 1 à 11, **caractérisé en ce qu'**un élément électriquement conducteur, s'étendant dans la direction circonférentielle et de préférence formé par une bande de caoutchouc (10), est prévu dans la région d'épaulement, lequel élément vient en contact à la fois avec le matériau électriquement conducteur (11, 12) et le passage de paroi latérale électriquement conducteur.
